(19) Europäisches Patentamt
European Patent Office
Office européen des brevets

(11) **EP 2 994 993 B1**

(12) **EUROPÄISCHE PATENTSCHRIFT**

(45) Veröffentlichungstag und Bekanntmachung des Hinweises auf die Patenterteilung:
**22.06.2022   Patentblatt 2022/25**

(21) Anmeldenummer: **14724391.9**

(22) Anmeldetag: **08.05.2014**

(51) Internationale Patentklassifikation (IPC):
**H02P 9/00** *(2006.01)*       **H02P 9/42** *(2006.01)*

(52) Gemeinsame Patentklassifikation (CPC):
**H02P 9/007; H02P 9/42**

(86) Internationale Anmeldenummer:
**PCT/EP2014/059475**

(87) Internationale Veröffentlichungsnummer:
**WO 2014/180960 (13.11.2014 Gazette 2014/46)**

(54) **ANTRIEBSSYSTEM**

DRIVE SYSTEM

SYSTÈME D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2013   DE 102013208552**

(43) Veröffentlichungstag der Anmeldung:
**16.03.2016   Patentblatt 2016/11**

(73) Patentinhaber: **Lenze Drives GmbH**
**32699 Extertal (DE)**

(72) Erfinder: **TOLKSDORF, Andreas**
**31789 Hameln (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
**US-A- 5 798 631**

- **NAVEED UR REHMAN MALIK ET AL: "Brushless doubly-fed induction machine with rotating power electronic converter for wind power applications", ELECTRICAL MACHINES AND SYSTEMS (ICEMS), 2011 INTERNATIONAL CONFERENCE ON, IEEE, 20. August 2011 (2011-08-20), Seiten 1-6, XP032020184, DOI: 10.1109/ICEMS.2011.6073422 ISBN: 978-1-4577-1044-5**
- **NAVEED-UR-REHMAN MALIK ET AL: "Dynamic modeling and control of a brushless doubly-fed induction generator with a rotating power electronic converter", ELECTRICAL MACHINES (ICEM), 2012 XXTH INTERNATIONAL CONFERENCE ON, IEEE, 2. September 2012 (2012-09-02), Seiten 900-906, XP032464824, DOI: 10.1109/ICELMACH.2012.6349983 ISBN: 978-1-4673-0143-5**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Antriebssystem basierend auf einem doppelt gespeisten Asynchronmotor.

Bei der so genannten Stromrichterkaskade eines doppelt gespeisten Asynchronmotors werden auftretende Rotorströme bzw. Rotorleistungen üblicherweise über Schleifringe abgeführt. Die Schleifringe sind jedoch stör- und wartungsanfällig.

Die Nichtpatentliteratur NAVEED UR REHMAN MALIK ET AL.: "Brushless doubly-fed induction machine with rotating power electronic converter for wind power applications", ELECTRICAL MACHINES AND SYSTEMS (ICEMS), 2011 INTERNATIONAL CONFERENCE ON, IEEE, 20. August 2011 (2011-08-20), Seiten 1-6, XP032020184, DOI: 10.1109/ICEMS.2011.6073422 ISBN: 978-1-4577-1044-5 zeigt eine bürstenlose, doppeltgespeiste Induktionsmaschine mit einem Wechselrichter, der drehfest mit einer angetriebenen Welle verbunden ist. Die Induktionsmaschine weist einen ersten Wicklungssatz und einen zweiten Wicklungssatz auf, wobei eine Statorwicklung des zweiten Wicklungssatzes ein DC-Wicklungssystem ist.

Der Erfindung liegt die Aufgabe zugrunde, ein Antriebssystem basierend auf einem doppelt gespeisten Asynchronmotor zur Verfügung zu stellen, das keine Schleifringe benötigt und das verglichen mit herkömmlichen doppelt gespeisten Asynchronmotoren verbesserte Betriebseigenschaften aufweist.

Die Erfindung löst diese Aufgabe durch ein Antriebssystem nach Anspruch 1.

Das Antriebssystem weist einen Drehstrommotor, einen ersten Wechselrichter und einen zweiten Wechselrichter auf.

Der Drehstrommotor weist herkömmlich eine durch ihn angetriebene Welle auf.

Der Drehstrommotor weist weiter einen ersten dreiphasigen Wicklungssatz auf. Der erste dreiphasige Wicklungssatz weist eine dreiphasige Statorwicklung auf, die herkömmlich, insbesondere ohne Zwischenschaltung eines Wechselrichters, direkt mit einem dreiphasigen Wechselspannungsnetz zur Erzeugung eines magnetischen Drehfelds zu verbinden ist. Der erste dreiphasige Wicklungssatz weist weiter eine dreiphasige Rotorwicklung oder Läuferwicklung auf, die mit der Welle drehfest mechanisch gekoppelt ist.

Der Drehstrommotor weist weiter einen zweiten dreiphasigen Wicklungssatz auf. Der zweite dreiphasige Wicklungssatz weist eine dreiphasige Statorwicklung auf, die mit dem dreiphasigen Wechselspannungsnetz derart zu verbinden ist, dass sich gegenüber dem magnetischen Drehfeld, das mittels der Statorwicklung des ersten Wicklungssatzes erzeugt wird, ein gegensinnig umlaufendes magnetisches Drehfeld ergibt. Der zweite dreiphasige Wicklungssatz weist weiter eine dreiphasige Rotorwicklung auf, die mit der Welle drehfest mechanisch gekoppelt ist.

Der erste Wechselrichter ist mit der Welle drehfest mechanisch gekoppelt, d.h. dreht mit der Welle mit, und elektrisch mit der dreiphasigen Rotorwicklung des ersten Wicklungssatzes gekoppelt. Der erste Wechselrichter erzeugt Ansteuersignale in Form von Ansteuerspannungen und/oder Ansteuerströmen geeigneter Amplitude und Phasenlage.

Der zweite Wechselrichter ist mit der Welle drehfest mechanisch gekoppelt und elektrisch mit der dreiphasigen Rotorwicklung des zweiten Wicklungssatzes gekoppelt.

Der erste Wechselrichter und der zweite Wechselrichter können derart elektrisch gekoppelt sein, dass elektrische Leistung zwischen den Wechselrichtern bidirektional übertragbar ist. Der erste und der zweite Wechselrichter können hierzu beispielsweise eine Zwischenkreiskopplung aufweisen.

Der zweite Wechselrichter kann dazu ausgebildet sein, Ansteuersignale für seine zugehörige Rotorwicklung derart zu erzeugen, dass eine mittels des zweiten Wechselrichters erzeugte resultierende Motordrehzahl einer mittels des ersten Wechselrichters erzeugten Motordrehzahl exakt entspricht.

Der erste und der zweite Wechselrichter sind dazu ausgebildet, Ansteuersignale für ihre zugehörigen Rotorwicklungen derart zu erzeugen, dass eine Summe aus einer mittels des ersten Wechselrichters in seine zugehörige Rotorwicklung eingespeisten Wirk-Leistung und einer mittels des zweiten Wechselrichters in seine zugehörige Rotorwicklung eingespeisten Wirk-Leistung Null beträgt.

Der erste und der zweite Wechselrichter können dazu ausgebildet sein, Ansteuersignale für ihre zugehörigen Rotorwicklungen derart zu erzeugen, dass eine Wirkrichtung eines mittels des ersten Wechselrichters erzeugten Drehmoments einer Wirkrichtung eines mittels des zweiten Wechselrichters erzeugten Drehmoments entspricht.

Das Antriebssystem kann ein mittels der Welle angetriebenes Lüfterrad aufweisen, wobei der erste und der zweite Wechselrichter mit dem Lüfterrad drehfest gekoppelt und thermisch gekoppelt sind. Der erste und der zweite Wechselrichter können an beliebiger Position, beispielsweise im Bereich des Drehpunkts des Lüfterrads oder außerhalb des Drehpunkts an bzw. auf dem Lüfterrad befestigt sein.

Der erste und der zweite Wechselrichter können in das Lüfterrad integriert sein, beispielsweise indem das Lüfterrad ein Gehäuse für den ersten und den zweiten Wechselrichter bildet.

Die Erfindung wird nachfolgend unter Bezugnahme auf die Zeichnungen detailliert beschrieben. Hierbei zeigt schematisch:

Fig. 1    ein erfindungsgemäßes Antriebssystem mit einem ersten und einem zweiten Antriebsteilsystem,

Fig. 2    komplementäre Arbeitspunkte der in Fig. 1 gezeigten Antriebsteilsysteme und

Fig. 3    Wirkrichtung von Rotorleistungen in den Betriebsquadranten des in Fig. 1 gezeigten Antriebssystems.

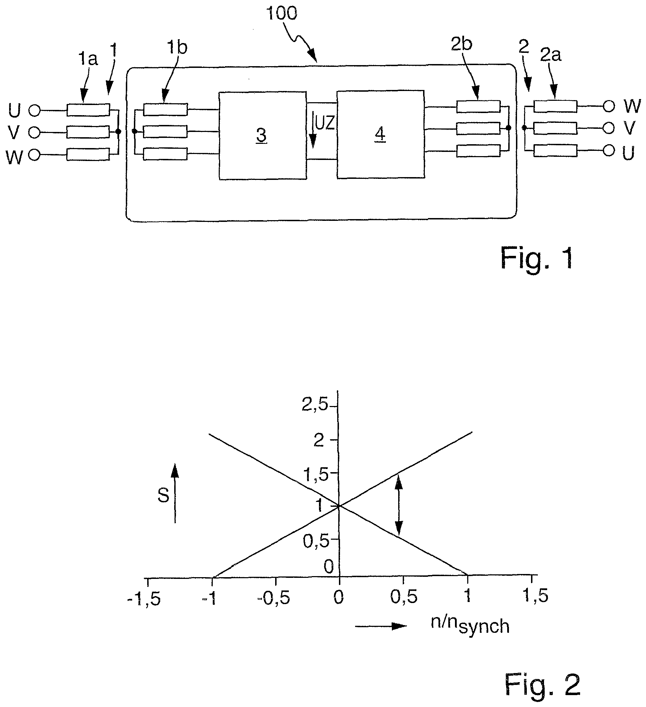

Fig. 1 zeigt ein erfindungsgemäßes Antriebssystem 100 mit einem Drehstrommotor, einem ersten Wechselrichter 3 und einem zweiten Wechselrichter 4.

Der Drehstrommotor weist herkömmlich eine nicht dargestellte Welle auf.

Der Drehstrommotor weist weiter einen ersten dreiphasigen Wicklungssatz 1 auf. Der erste dreiphasige Wicklungssatz 1 weist eine dreiphasige Statorwicklung 1a auf, die herkömmlich ohne Zwischenschaltung eines Wechselrichters direkt mit einem dreiphasigen Wechselspannungsnetz, hier exemplarisch den drei Netzphasen U, V und W, zur Erzeugung eines Drehfelds verbunden ist. Der erste dreiphasige Wicklungssatz 1 weist weiter eine dreiphasige Rotorwicklung 1b auf, die mit der Welle drehfest mechanisch gekoppelt ist.

Der Drehstrommotor weist weiter einen zweiten dreiphasigen Wicklungssatz 2 auf. Der zweite dreiphasige Wicklungssatz 2 weist eine dreiphasige Statorwicklung 2a auf, die mit dem dreiphasigen Wechselspannungsnetz, hier exemplarisch den drei Netzphasen in umgekehrter Reihenfolge W, V und U, verbunden ist, so dass sich gegenüber dem Drehfeld, das mittels der Statorwicklung 1a des ersten Wicklungssatzes 1 erzeugt wird, ein gegensinnig umlaufendes Drehfeld ergibt. Der zweite dreiphasige Wicklungssatz 2 weist weiter eine dreiphasige Rotorwicklung 2b auf, die mit der Welle drehfest mechanisch gekoppelt ist.

Um zu bewirken, dass die mittels der Statorwicklungen 1a und 2a erzeugten Drehfelder gegensinnig umlaufen, können die Wicklungssätze 1 und 2 beispielsweise gegensinnig gewickelt sein. Wie in Fig. 1 dargestellt, können alternativ die Statorspannungen U, V und W gegensinnig an die Statorwicklungen 1a und 1b angeschlossen werden.

Der erste Wechselrichter 3 ist mit der Welle drehfest mechanisch gekoppelt und elektrisch mit der dreiphasigen Rotorwicklung 1b des ersten Wicklungssatzes 1 gekoppelt. Der erste Wechselrichter 3 erzeugt Ansteuersignale in Form von Ansteuerspannungen und/oder Ansteuerströmen geeigneter Amplitude und Phasenlage.

Der zweite Wechselrichter 4 ist mit der Welle drehfest mechanisch gekoppelt und elektrisch mit der dreiphasigen Rotorwicklung 2b des zweiten Wicklungssatzes gekoppelt. Der erste Wechselrichter 3 und der zweite Wechselrichter 4 weisen eine Zwischenkreiskopplung auf (Zwischenkreisspannung UZ), so dass elektrische Leistung zwischen den Wechselrichtern 3 und 4 bidirektional übertragbar ist.

Der zweite Wechselrichter 4 ist dazu ausgebildet, Ansteuersignale für seine zugehörige Rotorwicklung

2b derart zu erzeugen, dass eine mittels des zweiten Wechselrichters 4 erzeugte resultierende Motordrehzahl einer mittels des ersten Wechselrichters 3 erzeugten Motordrehzahl entspricht.

Der erste und der zweite Wechselrichter 3 und 4 sind dazu ausgebildet, Ansteuersignale für ihre zugehörigen Rotorwicklungen 1b bzw. 2b derart zu erzeugen, dass eine Summe aus einer mittels des ersten Wechselrichters 3 in seine zugehörige Rotorwicklung 1b eingespeisten Wirkleistung und einer mittels des zweiten Wechselrichters 4 in seine zugehörige Rotorwicklung 2b eingespeisten Wirkleistung Null beträgt.

Der erste und der zweite Wechselrichter 3 und 4 sind dazu ausgebildet, Ansteuersignale für ihre zugehörigen Rotorwicklungen 1b bzw. 2b derart zu erzeugen, dass eine Wirkrichtung eines mittels des ersten Wechselrichters 3 erzeugten Drehmoments einer Wirkrichtung eines mittels des zweiten Wechselrichters 4 erzeugten Drehmoments entspricht.

Erfindungsgemäß werden auf der Rotorseite angeordnete und mit der (Motor-) Welle mitlaufende Wechselrichter (oder Frequenzumrichter) 3 und 4 eines doppelt gespeisten Asynchronmotors mit doppelt ausgeführten Wicklungssätzen 1 und 2 derart gesteuert, dass die bei Asynchronmotoren auftretende Rotorleistung des ersten Wicklungssatzes 1 durch die Rotorleistung des zweiten Wicklungssatzes 2 gerade kompensiert wird und die Rotorleistung des zweiten Wicklungssatzes 2 einen Drehmomentenbeitrag leistet, der im gleichen Sinn wirkt, wie das durch den ersten Wicklungssatz 1 erzeugte Drehmoment. Dadurch wird es möglich, den Drehstrommotor in allen vier Betriebsquadranten ohne Einschränkung der Drehzahl zwischen der Synchrondrehzahl des ersten Antriebsteilsystems und der Synchrondrehzahl des zweiten Antriebsteilsystem zu betreiben.

Die beiden Statorwicklungen 1a und 2a sind gemeinsam an ein dreiphasiges Netz mit den Phasenspannungen U, V, W zu legen und erzeugen in diesem im Wesentlichen sinusförmige Netzströme. Durch die 4-Quadrantenfähigkeit des Antriebssystems 100 sind im Weiteren keine zusätzlichen Maßnahmen wie Bremschopper bzw. -widerstände oder Elektroniken zur Energierückspeisung bei generatorischen Betriebszuständen erforderlich.

Die Erfindung basiert auf dem Prinzip der Stromrichterkaskade bei einem doppelt gespeisten Asynchronmotor. Die auftretenden Rotorströme und Rotorleistungen werden jedoch nicht über Schleifringe abgeführt, sondern von einem weiteren Wechselrichter 4, der mitlaufend auf der Welle angebracht ist.

Das Antriebssystem 100 weist zwei Antriebsteilsysteme (Teilmotoren) auf, nämlich ein erstes Antriebsteilsystem (erster Teilmotor) umfassend den ersten Wicklungssatz 1 und den zugehörigen ersten Wechselrichter 3 und ein zweites Antriebsteilsystem (zweiter Teilmotor) umfassend den zweiten Wicklungssatz 2 und den zugehörigen zweiten Wechselrichter 4.

In dem zweiten Antriebsteilsystem auf derselben Welle wird die über das erste Antriebsteilsystem übertragene Rotorleistung in das speisende Netz zurückübertragen.

Erfindungsgemäß wird ein komplementärer Arbeitspunkt im zweiten Antriebsteilsystem eingestellt. Dabei wird der Arbeitspunkt des zweiten Antriebsteilsystems mittels Steuerung des zweiten Wechselrichters 4 derart bestimmt, dass:

a) die Drehzahlen beider Teilmotoren bzw. Antriebsteilsysteme exakt gleich sind und

b) die Summe der beiden Rotorleistungen Null ergibt.

Für die Stromrichterkaskade gilt bekanntermaßen der Zusammenhang

$$n_{motor} = f_{Netz} - f_{WR1}$$

wobei hier die Polpaarzahl der Einfachheit halber mit p = 1 angenommen ist, wobei die Erfindung nicht darauf beschränkt ist. $n_{motor}$ bezeichnet eine Motordrehzahl, $f_{Netz}$ bezeichnet die Netzfrequenz und $f_{WR1}$ bezeichnet eine Frequenz einer durch den ersten Wechselrichter 3 erzeugten Grundschwingung.

Zum Erfüllen der Bedingung a) ist die Frequenz des zweiten Antriebsteilsystems so zu wählen, dass

$$f_{WR2} = 2 * f_{Netz} - f_{WR1}$$

gilt. Diese Frequenz stellt den komplementären Arbeitspunkt des zweiten Antriebsteilsystems für den Arbeitspunkt des ersten Antriebsteilsystems dar. $f_{WR2}$ bezeichnet eine Frequenz einer durch den zweiten Wechselrichter 4 erzeugten Grundschwingung.

Fig. 2 zeigt den Zusammenhang zwischen den erforderlichen Arbeitsfrequenzen der beiden Wechselrichter 3 und 4, wobei n die Drehzahl, $n_{synch}$ die synchrone Drehzahl und s den Schlupf bezeichnet. Ein Einfluss der Polpaarzahlen, die sich zwischen den Antriebsteilsystemen unterscheiden kann, ist aus Gründen der einfachen Darstellung nicht gezeigt.

Aus Fig. 2 geht hervor, dass zu jeder Drehzahl n genau zwei Arbeitspunkte zu finden sind, zu jedem Antriebsteilsystem jeweils einer.

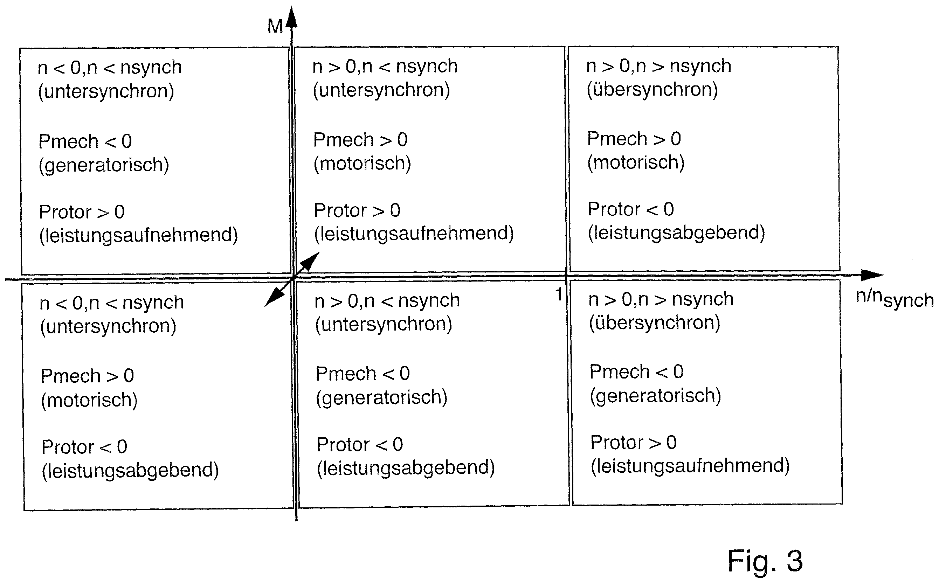

Fig. 3 verdeutlicht, dass in diesen Arbeitspunkten die Rotorleistungen bei gleicher Wirkrichtung des Motormomentes jeweils entgegengesetzte Vorzeichen aufweisen. Das hat seine Ursache darin, dass beispielsweise das erste Antriebsteilsystem im 1. Quadranten und das zweite Antriebsteilsystem im 3. Quadranten betrieben wird.

Für den Fall des generatorischen Betriebes liegen die Betriebspunkte der Antriebsteilsysteme im 2. und 4. Quadranten. Auch im generatorischen Betrieb verhalten sich die Rotorleistungen komplementär zueinander.

Aus Fig. 3 geht hervor, dass sich komplementäre Betriebspunkte nicht oberhalb der synchronen Drehzahl finden lassen. Drehzahlen oberhalb der synchronen Drehzahl lassen sich jedoch mit Drehmomenten im zweiten Antriebsteilsystem realisieren, die dem gewünschten Nutzmoment entgegenstehen. Allerdings sind in der Nähe der Synchrondrehzahl nur kleine Rotorleistungen im komplementären Antriebsteilsystem zu verarbeiten.

Die komplementären Betriebspunkte ermöglichen einen Drehzahlstellbereich zwischen den beiden synchronen Drehzahlen inklusive dem Motorstillstand und somit ein Fahren von konstanten Lastmomenten unterhalb der synchronen Drehzahl. Erfindungsgemäß kann mittels der auf der Rotorseite angeordneten Wechselrichter eine Nutzung der komplementären bzw. korrespondierenden Betriebspunkte im kompletten Drehzahlbereich zwischen den synchronen Drehzahlen der beiden Teilsysteme erfolgen, bei denen gleichsinnig wirkende Drehmomente vorliegen.

Die beiden Statordrehfelder der Antriebsteilsysteme laufen entgegengesetzt um. Daraus resultieren dann gleichgerichtete Drehmomente zwischen den synchronen Drehzahlen.

Dadurch, dass sich beide Antriebsteilsysteme wie ein allgemeiner Transformator verhalten, wird beim Einschalten der Netzspannung auf der Statorseite zunächst über Freilaufdioden (nicht gezeigt) der auf der Rotorseite angeordneten Wechselrichter 3 und 4 eine zwischen den Wechselrichtern 3 und 4 gemeinsam vorhandene Zwischenkreiskapazität geladen. Solange die Wechselrichter 3 und 4 nicht getaktet betrieben werden, stellt sich im Zwischenkreis die gleichgerichtete Leerlaufspannung der Rotorseite ein. Eine Drehbewegung des Motors setzt nicht ein.

Eine Hilfsspannungsversorgung der Wechselrichter 3 und 4 kann über einen Abgriff der Zwischenkreisspannung UZ erfolgen. Die notwendige Leistung wird über eine Verstimmung der Leistungsbilanz der Rotorleistung gedeckt. Das ist auch bei synchroner Drehzahl eines der Antriebsteilsysteme durch das jeweils andere Antriebsteilsystem möglich.

Als jeweilige Betriebs- bzw. Regelungsverfahren der Wechselrichter 3 und 4 werden bevorzugt so genannte Vectorregelungen eingesetzt, die es erlauben, die Amplituden und die Phasenwinkel der Rotorströme zu regeln. Die regelungstechnischen Verfahren zur Beherrschung einer doppelt gespeisten Asynchronmaschine sind hinlänglich bekannt und können auch hier verwendet werden.

Zur Erzielung des Leistungsgleichgewichts zwischen den beiden Antriebsteilsystemen kann die Zwischenkreisspannung UZ der beiden Wechselrichter 3 und 4 als Regelgröße genutzt werden.

Die Drehzahl n = 0 stellt für das erfindungsgemäße Antriebssystem 100 keinen außergewöhnlichen Betriebszustand dar. Da die zu regelnden Rotorströme in beiden Antriebsteilsystemen mit Netzfrequenz umlaufen, treten die sonst in Asynchronmotoren vorhandenen Schwierigkeiten beim Beherrschen des Motorstillstandes mit Moment vorliegend nicht auf. Es tritt ein weicher Übergang zwischen motorischem und generatorischem Betrieb auf. Dies hat eine besondere Bedeutung z.B. für Hubantriebe.

Im Stillstand weist die Rotorleistung eines Antriebsteilsystems eine Höhe auf, die der Wellenleistung bei synchroner Drehzahl bei gleichem Drehmoment entspricht. Diese Rotorleistung führt bei Vernachlässigung von im System vorhandenen Verlusten im Stillstand zu einem gleich hohen Drehmoment im zweiten Antriebsteilsystem. Daraus folgt, dass im Anlauf jedes Antriebsteilsystem einen hälftigen Beitrag zum erforderlichen Drehmoment leistet. Diese Eigenschaft macht das erfindungsgemäße Antriebssystem für alle Applikationen einsetzbar, in denen hohe und auch zyklische Anlaufdrehmomente erforderlich sind, und mit steigender Drehzahl der Drehmomentenbedarf rückläufig ist, wie z.B. in vielen Fördertechnikanwendungen.

Die Frequenz der Rotorströme wird in beiden Antriebsteilsystemen eingeprägt. Unter Last verändern sich ausschließlich die Amplitude und der Winkel der Rotorströme, nicht aber die Frequenz. Ein lückenloser Wechsel durch alle vier Betriebsquadranten ist mit diesem Antrieb möglich.

Änderungen der Netzfrequenz führen zu Änderung der Drehzahl. Für den komplementären Arbeitspunkt ist jedoch die Frequenz des zweiten Wechselrichters 4 bei einer Änderung der Netzfrequenz mit doppeltem Hub nachzuregeln, um die Bestimmungsgleichung (siehe oben) für den komplementären Arbeitspunkt einzuhalten. Da hieraus die Höhe der Frequenznachführung bekannt ist, kann auch der Arbeitspunkt des ersten Wechselrichters 3 nachgeführt werden. Das System verhält sich dann drehzahlsteif.

Es versteht sich, dass das erfindungsgemäße Antriebssystem 100 nicht auf eine Polpaarzahl p = 1 beschränkt ist. Prinzipiell lassen sich die hier angegebenen Gleichungen auch für andere Polpaarzahlen angeben. Darauf wurde aber aus Gründen der Übersichtlichkeit verzichtet.

Wenn die Polpaarzahlen beider Antriebsteilsysteme gleich sind, ergeben sich symmetrische Betriebspunkte unabhängig von der Drehrichtung der Wechselrichterfrequenzen und Phasenfolge der Netzspannung. Die komplementären Arbeitspunkte sind wie in Fig. 2 gezeigt symmetrisch zueinander. Bei unterschiedlichen Polpaarzahlen der Antriebsteilsysteme verändern sich die Steigungen der Geraden in Fig. 2, was zu einer Anpassung der Gleichung zur Ermittlung der komplementären Arbeitspunkte führt.

Prinzipiell ist die Topologie der Wechselrichter 3 und 4 nicht auf Spannungszwischenkreiswechselrichter beschränkt. I-Umrichter und Direktumrichter lassen sich ebenfalls prinzipiell nutzen.

Grundsätzlich ist die Dimensionierung der Antriebsteilsysteme nicht darauf beschränkt, symmetrisch ausgeführt zu werden. Eine symmetrische Auslegung führt dazu, dass keine bevorzugte Drehrichtung des Antriebssystems vorhanden ist und alle vier Quadranten gleichwertig genutzt werden können. Eine Abhängigkeit von der Phasenfolge der Netzspannung ist nicht vorhanden. Eine unsymmetrische Auslegung der beiden Antriebsteilsysteme kann insbesondere in Applikationen mit bevorzugter Drehrichtung und linear oder quadratischen Drehmomentenverläufen zu einer erheblichen Reduzierung der erforderlichen Baugrößen der beteiligten Komponenten führen.

Mittels der Erfindung kann eine Asynchronmaschine als drehzahlvariabler Antrieb am starren Netz in allen vier Betriebsquadranten betrieben werden. Weiter ist ein rückführloser Betrieb mit hoher Genauigkeit der Drehzahl möglich. Es können kleine Drehzahlen bis in den Stillstand und der Wechsel in den generatorischen Betrieb beherrscht werden. Systembedingt treten lediglich sinusförmige Netzströme auf, wodurch die Netzbelastung erheblich reduziert wird.

Es ist ein blindleistungsloser Betrieb im Netz möglich, da die Blindleistung des Motors über die rotorseitigen Wechselrichter geführt werden kann. Dadurch kann die Netzbelastung weiter reduziert werden.

Gegenüber herkömmlichen Systemen können die Wechselrichter für kleinere Leistungen dimensioniert werden, da nur die Läuferleistung in den Wechselrichtern geführt werden muss.

Es können kostengünstige und verlustarme Leistungsbauteile mit niedriger Nennspannung eingesetzt werden, da über das Windungszahlverhältnis der Läufer-/Statorwicklungen die Rotorspannung bestimmt werden kann.

Der EMV-Aufwand kann reduziert werden, da auf der Läuferseite des Wechselrichters geschaltet wird.

**Patentansprüche**

1. Antriebssystem (100), aufweisend:

    - einen Drehstrommotor, aufweisend:

        - eine Welle,
        - einen ersten dreiphasigen Wicklungssatz (1), aufweisend:

            - eine dreiphasige Statorwicklung (1a), die mit einem dreiphasigen Wechselspannungsnetz (U, V, W) zu verbinden ist, und
            - eine dreiphasige Rotorwicklung (1b), die mit der Welle drehfest mechanisch gekoppelt ist, und

        - einen zweiten dreiphasigen Wicklungssatz (2), aufweisend:

- eine dreiphasige Statorwicklung (2a), die mit dem dreiphasigen Wechselspannungsnetz (U, V, W) derart zu verbinden ist, dass sich gegenüber einem Drehfeld, das mittels der Statorwicklung (1a) des ersten Wicklungssatzes (1) erzeugt wird, ein gegensinnig umlaufendes Drehfeld ergibt, und
- eine dreiphasige Rotorwicklung (2b), die mit der Welle drehfest mechanisch gekoppelt ist,

- einen ersten Wechselrichter (3), der mit der Welle drehfest mechanisch gekoppelt ist und der elektrisch mit der dreiphasigen Rotorwicklung (1b) des ersten Wicklungssatzes (1) gekoppelt ist, und
- einen zweiten Wechselrichter (4), der mit der Welle drehfest mechanisch gekoppelt ist und der elektrisch mit der dreiphasigen Rotorwicklung (2b) des zweiten Wicklungssatzes (2) gekoppelt ist,
- wobei der erste Wechselrichter (3) und der zweite Wechselrichter (4) derart elektrisch gekoppelt sind, dass elektrische Leistung zwischen den Wechselrichtern übertragbar ist,
- wobei der zweite Wechselrichter (4) dazu ausgebildet ist, Ansteuersignale für seine zugehörige Rotorwicklung (2b) derart zu erzeugen, dass eine mittels des zweiten Wechselrichters (4) erzeugte Motordrehzahl einer mittels des ersten Wechselrichters (3) erzeugten Motordrehzahl entspricht, **wobei hierzu bei einer Polpaarzahl von p = 1 gilt:**

$$f_{WR2} = 2 * f_{Netz} - f_{WR1}$$

- **wobei $f_{Netz}$ eine Netzfrequenz bezeichnet, $f_{WR1}$ eine Frequenz einer durch den ersten Wechselrichter (3) erzeugten Grundschwingung bezeichnet und $f_{WR2}$ eine Frequenz einer durch den zweiten Wechselrichter (4) erzeugten Grundschwingung bezeichnet,**
- wobei der erste und der zweite Wechselrichter (3, 4) dazu ausgebildet sind, Ansteuersignale für ihre zugehörigen Rotorwicklungen (1b, 2b) derart zu erzeugen, dass eine Wirkrichtung eines mittels des ersten Wechselrichters (3) erzeugten Drehmoments und eine Wirkrichtung eines mittels des zweiten Wechselrichters (4) erzeugten Drehmoments übereinstimmen, und
- **wobei der erste und der zweite Wechselrichter (3, 4) dazu ausgebildet sind, Ansteuersignale für ihre zugehörigen Rotorwicklungen (1b, 2b) derart zu erzeugen, dass eine Summe aus einer mittels des ersten Wechselrichters (3) in seine zugehörige Rotor-**

**wicklung (1b) eingespeisten Leistung und einer mittels des zweiten Wechselrichters (4) in seine zugehörige Rotorwicklung (2b) eingespeisten Leistung Null beträgt.**

2. Antriebssystem (100) nach Anspruch 1, **gekennzeichnet, durch** ein mittels der Welle angetriebenes Lüfterrad, wobei der erste und der zweite Wechselrichter (3, 4) mit dem Lüfterrad drehfest gekoppelt und thermisch gekoppelt sind.

3. Antriebssystem nach Anspruch 2, **dadurch gekennzeichnet, dass** der erste und der zweite Wechselrichter (3, 4) in das Lüfterrad integriert sind.

4. Antriebssystem nach Anspruch 2 oder 3, **dadurch gekennzeichnet, dass** das Lüfterrad ein Gehäuse für den ersten und den zweiten Wechselrichter (3, 4) bildet.

**Claims**

1. Drive system (100) having:

    - a three-phase motor, comprising:

        - a shaft,
        - a first three-phase winding set (1), having:

            - a three-phase stator winding (1a), which is to be connected to a three-phase AC voltage grid (U, V, W), and
            - a three-phase rotor winding (1b), which is mechanically coupled in rotationally fixed fashion to the shaft, and

        - a second three-phase winding set (2), having:

            - a three-phase stator winding (2a), which is to be connected to the three-phase AC voltage grid (U, V, W) in such a way that a rotating field rotating in opposition results with respect to a rotating field, which is generated by means of the stator winding (1a) of the first winding set (1), and
            - a three-phase rotor winding (2b) which is mechanically coupled in rotationally fixed fashion to the shaft,

    - a first inverter (3), which is mechanically coupled in rotationally fixed fashion to the shaft and which is electrically coupled to the three-phase rotor winding (1b) of the first winding set (1), and
    - a second inverter (4), which is mechanically coupled in rotationally fixed fashion to the shaft and which is electrically coupled to the three-phase rotor winding (2b) of the second winding set (2),
- wherein the first inverter (3) and the second inverter (4) are electrically coupled in such a manner that electrical power can be transmitted between the inverters,
- wherein the second inverter (4) is designed to produce actuation signals for the rotor winding (2b) associated therewith in such a manner that a motor speed produced by means of the second inverter (4) corresponds to a motor speed produced by means of the first inverter (3), wherein the following holds true for a pole pair number of p = 1:

$$f_{WR2} = 2 * f_{Netz} - f_{WR1}$$

- wherein $f_{Netz}$ denotes a network frequency, $f_{WR1}$ denotes a frequency of a fundamental produced by the first inverter (3) and $f_{WR2}$ denotes a frequency of a fundamental produced by the second inverter (4),
- wherein the first and the second inverter (3, 4) are designed to produce actuation signals for the rotor windings (1b, 2b) associated therewith in such a manner that a direction of action of a torque produced by means of the first inverter (3) and an operating direction of a torque produced by means of the second inverter (4) match, and
- wherein the first and the second inverter (3, 4) are designed to produce actuation signals for the rotor windings (1b, 2b) associated therewith in such a manner that a sum of a power fed by means of the first inverter (3) into the rotor winding (1b) associated therewith and a power fed by means of the second inverter (4) into the rotor winding (2b) associated therewith is zero.

2. Drive system (100) according to Claim 1, **characterized by** a fan impeller driven by means of the shaft, wherein the first and the second inverter (3, 4) are coupled in rotationally fixed fashion and coupled thermally to the fan impeller.

3. Drive system according to Claim 2, **characterized in that** the first and the second inverter (3, 4) are integrated into the fan impeller.

4. Drive system according to Claim 2 or 3, **characterized in that** the fan impeller forms a housing for the first and the second inverter (3, 4).

**Revendications**

1. Système d'entraînement (100), présentant :

- un moteur triphasé, présentant :

- un arbre,
- un premier ensemble d'enroulements triphasés (1), présentant :

- un enroulement de stator triphasé (1a), qui doit être relié à un réseau de tension alternative triphasé (U, V, W), et
- un enroulement de rotor triphasé (1b), qui est couplé mécaniquement à l'arbre de manière immobile en rotation, et

- un deuxième ensemble d'enroulements triphasés (2), présentant :

- un enroulement de stator triphasé (2a), qui doit être relié au réseau de tension alternative triphasé (U, V, W) de telle sorte qu'il en résulte un champ rotatif tournant en sens inverse par rapport à un champ rotatif qui est généré au moyen de l'enroulement de stator (1a) du premier ensemble d'enroulements (1), et
- un enroulement de rotor triphasé (2b), qui est couplé mécaniquement à l'arbre de manière immobile en rotation,

- un premier onduleur (3), qui est couplé mécaniquement à l'arbre de manière immobile en rotation et qui est couplé électriquement à l'enroulement de rotor triphasé (1b) du premier ensemble d'enroulements (1), et
- un deuxième onduleur (4), qui est couplé mécaniquement à l'arbre de manière immobile en rotation et qui est couplé électriquement à l'enroulement de rotor triphasé (2b) du deuxième ensemble d'enroulements (2),
- le premier onduleur (3) et le deuxième onduleur (4) étant couplés électriquement de telle sorte qu'une puissance électrique peut être transférée entre les onduleurs,
- le deuxième onduleur (4) étant configuré pour générer des signaux de commande pour son enroulement de rotor associé (2b), de telle sorte qu'une vitesse de rotation de moteur générée au moyen du deuxième onduleur (4) correspond à une vitesse de rotation de moteur générée au moyen du premier onduleur (3), à cet effet, avec un nombre de paires de pôles de p = 1 :

$$f_{WR2} = 2 * f_{réseau} - f_{WR1}$$

- où $f_{réseau}$ désigne une fréquence de réseau, $f_{WR1}$ désigne une fréquence d'une oscillation fondamentale générée par le premier onduleur (3) et $f_{WR2}$ désigne une fréquence d'une oscillation fondamentale générée par le deuxième onduleur (4),

- le premier et le deuxième onduleur (3, 4) étant configurés pour générer des signaux de commande pour leurs enroulements de rotor associés (1b, 2b) de telle sorte qu'une direction d'action d'un couple généré au moyen du premier onduleur (3) et une direction d'action d'un couple généré au moyen du deuxième onduleur (4) coïncident, et

- le premier et le deuxième onduleur (3, 4) étant configurés pour générer des signaux de commande pour leurs enroulements de rotor associés (1b, 2b) de telle sorte qu'une somme d'une puissance injectée au moyen du premier onduleur (3) dans son enroulement de rotor associé (1b) et d'une puissance injectée au moyen du deuxième onduleur (4) dans son enroulement de rotor associé (2b) est nulle.

2. Système d'entraînement (100) selon la revendication 1, **caractérisé par** une roue de soufflante entraînée au moyen de l'arbre, le premier et le deuxième onduleur (3, 4) étant couplés de manière immobile en rotation et couplés thermiquement à la roue de soufflante.

3. Système d'entraînement selon la revendication 2, **caractérisé en ce que** le premier et le deuxième onduleur (3, 4) sont intégrés dans la roue de soufflante.

4. Système d'entraînement selon la revendication 2 ou 3, **caractérisé en ce que** la roue de soufflante forme un boîtier pour le premier et le deuxième onduleur (3, 4).

Fig. 1

Fig. 2

M

n/n$_{synch}$

| n < 0, n < nsynch<br>(untersynchron)<br><br>Pmech < 0<br>(generatorisch)<br><br>Protor > 0<br>(leistungsaufnehmend) | n > 0, n < nsynch<br>(untersynchron)<br><br>Pmech > 0<br>(motorisch)<br><br>Protor > 0<br>(leistungsaufnehmend) | n > 0, n > nsynch<br>(übersynchron)<br><br>Pmech > 0<br>(motorisch)<br><br>Protor < 0<br>(leistungsabgebend) |
|---|---|---|
| n < 0, n < nsynch<br>(untersynchron)<br><br>Pmech > 0<br>(motorisch)<br><br>Protor < 0<br>(leistungsabgebend) | n > 0, n < nsynch<br>(untersynchron)<br><br>Pmech < 0<br>(generatorisch)<br><br>Protor < 0<br>(leistungsabgebend) | n > 0, n > nsynch<br>(übersynchron)<br><br>Pmech < 0<br>(generatorisch)<br><br>Protor > 0<br>(leistungsaufnehmend) |

1

Fig. 3

EP 2 994 993 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Brushless doubly-fed induction machine with rotating power electronic converter for wind power applications. **NAVEED UR REHMAN MALIK et al.** ELECTRICAL MACHINES AND SYSTEMS (ICEMS). 2011 INTERNATIONAL CONFERENCE ON, IEEE, 20. August 2011, 1-6